(19) Europäisches Patentamt

European Patent Office

Office européen des brevets

(11) EP 1 659 722 A1

(12) EUROPEAN PATENT APPLICATION
published in accordance with Art. 158(3) EPC

(43) Date of publication:
24.05.2006 Bulletin 2006/21

(51) Int Cl.:
*H04J 11/00* (1974.07)

(21) Application number: 04773301.9

(22) Date of filing: 17.09.2004

(86) International application number:
PCT/JP2004/013682

(87) International publication number:
WO 2005/032020 (07.04.2005 Gazette 2005/14)

(84) Designated Contracting States:
DE FR GB

(30) Priority: 25.09.2003 JP 2003334007

(71) Applicant: MATSUSHITA ELECTRIC INDUSTRIAL
CO., LTD.
Kadoma-shi, Osaka 571-8501 (JP)

(72) Inventors:
• EBIKO, Keisuke
Kanagawa 239-0831 (JP)

• UESUGI, Mitsuru
Kanagawa 238-0048 (JP)

(74) Representative: Grünecker, Kinkeldey,
Stockmair & Schwanhäusser
Anwaltssozietät
Maximilianstrasse 58
80538 München (DE)

(54) **RADIO COMMUNICATION APPARATUS AND PEAK SUPPRESSING METHOD**

(57) A radio communication apparatus enabling reduction in peak-to-average power ratio without decreasing the transmission efficiency. In this apparatus, buffer section 103 temporarily stores input data prior to peak suppression. Peak detecting section 106 detects a peak with an amplitude level not less than a threshold. Peak cut section 107 reduces the detected peak to the threshold. Switching section 109 is switched so that the peak suppressed signal is output to FFT section 114 when the peak is detected, while the peak suppressed signal is subjected to transmission processing when the peak is not detected. Based on MCS information, signal recovering section 115 eliminates a signal assigned to a subcarrier set for MCS of a high level, and as a substitute, assigns the signal prior to peak suppression stored in buffer section 103. MCS setting section 116 selects MCS based on reception quality information of a communicating party.

FIG.1

**Description**

Technical Field

The present invention relates to a radio communication apparatus and peak suppressing method, and more particularly, to a radio communication apparatus that transmits transmission data with a plurality of subcarriers and a peak suppressing method.

Background Art

Multicarrier transmission is of technique for transmitting data with a plurality of subcarriers of which the transmission rate is limited to such an extent that frequency selective fading does not occur, thereby improving the transmission efficiency, and enabling high-rate transmission as a result. In particular, OFDM (Orthogonal Frequency Division Multiplexing) modulation achieves the highest spectral efficiency among multicarrier transmission schemes, because its data subcarriers are orthogonal to one another. Therefore, OFDM system and OFDM-CDMA system obtained by combining OFDM and CDMA (Code Division Multiple Access) have been studied as a future high-rate transmission technique.
As described above, in the multicarrier transmission system such as the OFDM modulation system and the like, parallel transmission is performed using a plurality of subcarriers. At this point, when phases of the subcarriers are coherent, remarkably high transmission peak power occurs as compared with the average transmission power. In the case of high transmission peak power, to prevent non-linear distortion and out-of-band unnecessary emission of a transmission signal due to signal amplification, such a transmission power amplifier should be used that is able to maintain the linearity of output over a wide dynamic range. But the efficiency of such a power amplifier is remarkably low in general, and power consumption increases in the communication apparatus. The theoretical transmission peak power increases in proportion to the number of subcarriers, but actually the probability is extremely low of generating a transmission data sequence that provides the maximum power. Therefore, an input back-off of a power amplifier is usually set at about 10dB.
Hence, various methods have been contrived to reduce the Peak-to-Average Power Ratio (PAPR). For example, the so-called clipping (or peak limit or peak cut) is known as a PARR reduction method (for example, Patent Document 1). In the peak clipping method, the amplitude of a time waveform is limited by eliminating, i.e. clipping a part exceeding a predetermined threshold in the time waveform of a complex baseband signal prior to signal amplification.
Signal amplitude Y subsequent to peak clipping is given in equation (1), where x is signal amplitude prior to peak clipping and $\alpha$ is a threshold for peak clipping.
$$y = \begin{cases} -\alpha & (x < -\alpha) \\ x & (-\alpha \leq x \leq \alpha) \\ \alpha & (x > \alpha) \end{cases}$$

$$(\text{Equation 1})$$

When peak clipping is performed, non-linear distortion occurs in a transmission signal, thereby degrading transmission characteristics of the transmission signal. Further, since unnecessary, out-of-band emission occurs and needs to be removed with a band limit filter, a peak may occur again in the signal by allowing the signal through the band limit filter. In addition, it is known that the effect of conventional peak clipping on transmission characteristics varies with subcarriers due to the degree of contribution to generation of peak power.
Meanwhile, in the OFDM radio communication system, a base station apparatus receives a report of reception quality for each subcarrier in a communication terminal apparatus, and based on the reported reception quality, is capable of assigning a plurality of suitable subcarriers to each user (frequency division user multiplexing) and setting MCS (Modulation Coding Schemes) on each subcarrier. In other words, based on the channel quality, the base station apparatus assigns to each user subcarriers with the highest spectral efficiency meeting desired communication quality (for example, minimum transmission rate and error rate), selects high-rate MCS for each subcarrier to transmit data, and thus performs high-rate data communications with a plurality of users.
Herein, MCS is the designation of a transmission parameter set including a modulation scheme, coding scheme, transmission power adjustment value, spreading rate and the like. In performing transmission, an MCS table is referred to, and MCS of each symbol is assigned. In multicarrier transmission, it is possible to assign different MCS on a subcarrier basis. Particularly, in radio communication where frequency selective fading occurs due to multipath, propagation path conditions differ from one another for each subcarrier, and it is thereby possible to implement high transmission efficiency by setting MCS on a subcarrier basis to be adapted to the propagation path condition.

Patent Document 1: JP2002-44054

Disclosure of Invention

Problems to be Solved by the Invention

However, in the conventional radio communication apparatus and peak suppressing method, peak clipping processing is performed without considering MCS assignment of each subcarrier. Even when different MCS are assigned to subcarriers in the same symbol, non-linear distortion occurs in the entire multicarrier signal due to amplitude limitation. Accordingly, a problem arises that desired high transmission efficiency cannot be obtained when such non-linear distortion occurs in a signal assigned a subcarrier set for MCS with a high transmission rate.
It is an object of the present invention to provide a radio communication apparatus and peak suppressing method enabling reduction in peak-to-average power ratio without decreasing the transmission efficiency.

Means for Solving the Problem

A radio communication apparatus of the invention adopts a configuration provided with a transmission rate setter that sets a higher transmission rate on a subcarrier with a larger measurement value indicative of reception quality of a communicating party, a peak detector that detects a suppression target peak such that a signal level of a transmission signal is more than or equal to a first threshold, a peak suppressor that suppresses the suppression target peak by a predetermined amount based on a transmission signal that is assigned to a subcarrier with a transmission rate set in the transmission rate setter being less than a second threshold, and a transmitter that transmits the transmission signal with the suppression target peak suppressed in the peak suppressor.
A peak suppressing method of the invention has the steps of setting a higher transmission rate on a subcarrier with a larger measurement value indicative of reception quality of a communicating party, detecting a suppression target peak such that a signal level of a transmission signal is more than or equal to a first threshold, and suppressing the suppression target peak by a predetermined amount based on a transmission signal that is assigned to a subcarrier with a set transmission rate less than a second threshold.

Advantageous Effect of the Invention

According to the invention, it is possible to reduce the peak-to-average power ratio without decreasing the transmission efficiency.

Brief Description of Drawings

FIG. 1 is a block diagram illustrating a configuration of a radio communication apparatus according to Embodiment 1 of the present invention;
FIG. 2 is a block diagram illustrating a configuration of a signal recovering section according to Embodiment 1 of the invention;
FIG.3 is a flow diagram illustrating the operation of a radio communication apparatus according to Embodiment 1 of the invention;
FIG.4 is a graph showing changes in time waveform of an OFDM signal by peak cut and signal recovery according to Embodiment 1 of the invention;
FIG.5 is a graph showing changes in OFDM-signal vector expressed on the IQ plane by peak cut and signal recovery according to Embodiment 1 of the invention;
FIG.6 is a view showing an OFDM signal according to Embodiment 1 of the invention;
FIG. 7 is a view showing another OFDM signal according to Embodiment 1 of the invention;
FIG.8 is a view showing still another OFDM signal according to Embodiment 1 of the invention;
FIG.9 is a table showing an MCS table according to Embodiment 1 of the invention;
FIG.10 is a block diagram illustrating a configuration of a radio communication apparatus according to Embodiment 2 of the present invention;
FIG.11 is a block diagram illustrating a configuration of a puncturing section according to Embodiment 2 of the invention;

FIG.12 is a flow diagram illustrating the operation of a radio communication apparatus according to Embodiment 2 of the invention;

FIG.13 is a graph showing changes in OFDM-signal vector expressed on the IQ plane by peak cut and signal recovery according to Embodiment 2 of the invention;

FIG.14 is a view showing an OFDM signal according to Embodiment 2 of the invention;

FIG.15 is a view showing another OFDM signal according to Embodiment 2 of the invention; and

FIG.16 is a view showing still another OFDM signal according to Embodiment 2 of the invention.

Best Mode for Carrying Out the Invention

Embodiments of the present invention will specifically be described below with reference to accompanying drawings.

(Embodiment 1)

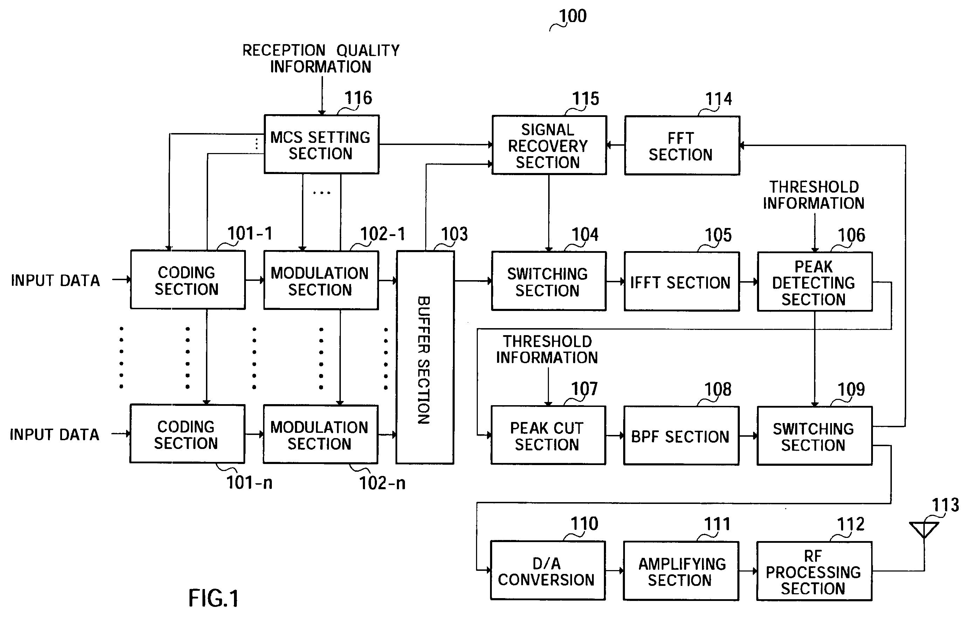

FIG. 1 is a block diagram illustrating a configuration of radio communication apparatus 100 according to Embodiment 1 of the present invention.

Based on control of MCS setting section 116, coding sections 101-1 to 101-n encode input data with predetermined coding rates for each subcarrier to output to modulation sections 102-1 to 102-n for each subcarrier, respectively.

Based on control of MCS setting section 116, modulation sections 102-1 to 102-n modulate the input data for each subcarrier input from coding sections 101-1 to 101-n with predetermined modulation schemes to output to buffer section 103, respectively.

Buffer section 103 outputs the input data input from modulation sections 102-1 to 102-n to switching section 104, while temporarily storing the input data input from modulation sections 102-1 to 102-n and outputting the stored input data to signal recovering section 115 at predetermined timing.

Switching section 104 switches between the input data input from buffer section 103 and the recovered input data input from signal recovering section 115 to output to Inverse Fast Fourier Transform (hereinafter, referred to as "IFFT") section 105.

IFFT section 105 performs IFFT processing on parallel-signal input data input from switching section 104, and transforms the input data from a frequency-domain signal to a time-domain signal. Then, IFFT section 105 outputs the IFFT-processed signal to peak detecting section 106.

Peak detecting section 106 detects the presence or absence of a suppression target peak with signal amplitude (signal level) more than or equal to a threshold (first threshold) in the input data input from IFFT section 105, and outputs the detection result to peak cut section 107 and switching section 109.

When the signal amplitude more than or equal to the threshold is detected from the peak detection result input from peak detecting section 106, peak cut section 107 that is a peak suppressor suppresses the amplitude by a predetermined amount by performing peak clipping on the signal amplitude more than or equal to the threshold. Then, peak cut section 107 outputs the input data subjected to peak clipping to Band-Pass Filter (hereinafter, referred to as "BPF") section 108.

BPF section 108 limits a band of the peak-clipped input data input from peak cut section 107, and thereby removes unnecessary emission components and the like to output to switching section 109.

Using the peak detection result input from peak detecting section 106, switching section 109 outputs the input data input from BPF section 108 to Fast Fourier Transform (hereinafter, referred to as "FFT") section 114 when a peak is detected, while outputting the input data input from BPF section 108 to Digital/Analog (hereinafter, referred to as "D/A") conversion section 110 when a peak is not detected.

D/A conversion section 110 performs D/A conversion on the input data input from switching section 109 to output to amplifying section 111.

Amplifying section 111 amplifies the input data input from D/A conversion section 110 to output to RF processing section 112.

RF processing section 112 performs processing such as upconverting on the input data input from amplifying section 111 to convert from the baseband frequency to radio frequency and the like, and transmits the radio signal from antenna 113.

FFT section 114 performs FFT processing on the input data input from switching section 109, and thereby transforms the data from the time-domain signal to the frequency-domain signal. Then, FFT section 114 outputs the FFT-processed signal to signal recovering section 115.

Based on the input data input from FFT section 114 and MCS information input from MCS setting section 116, in order to protect the input data that is assigned to a subcarrier (high-transmission rate subcarrier) set for upper MCS more than or equal to a predetermined threshold (second threshold) from non-linear distortion caused by peak clipping, signal recovering section 115 that is the peak suppressor reads from buffer section 103 a signal which is obtained prior to peak clipping and corresponds to the input data assigned to the subcarrier set for the upper MCS only on subcarriers set for upper MCS, and replaces the signal (suppressed transmission signal) subsequent to peak clipping with the read signal. Then, signal recovering section 115 outputs the signal-replaced input data to switching section 104. In addition, details of signal 1 recovering section 115 will be described later.

MCS setting section 116 that is a transmission rate setter selects MCS indicative of a transmission rate, based on CQI (Channel Quality Information) that is a measurement value (reception quality information) indicative of reception quality on a subcarrier basis of each communicating party extracted from the received signal. In other words, MCS setting section 116 sets MCS with a higher transmission rate as the reception quality is more excellent. Then, MCS setting section 116 outputs the MCS information that is information of the selected MCS of each subcarrier to signal recovering section 115. Further, MCS setting section 116 controls coding sections 101-1 to 101-n to encode with coding rates of the selected MCS, while controlling modulation sections 102-1 to 102-n to modulate with modulation schemes of the selected MCS.

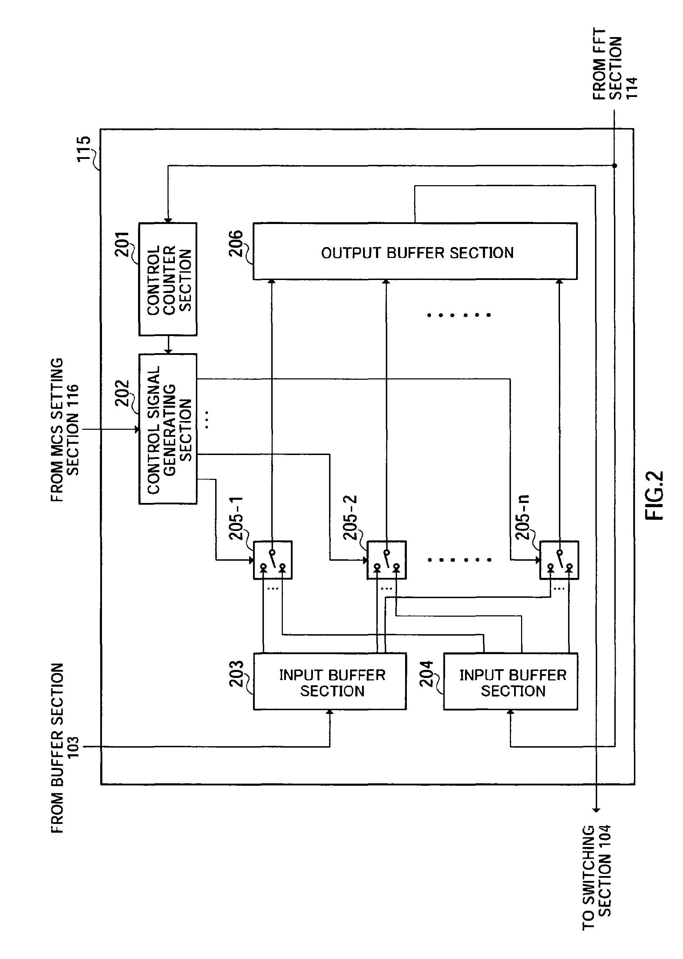

Details of signal recovering section 115 will be described below with reference to FIG.2. FIG.2 is a block diagram illustrating a configuration of signal recovering section 115.

Control counter section 201 counts the input data and increments by one whenever the input data is input from FFT section 114. In other words, control counter section 201 counts the number of repetitions of peak clipping based on an OFDM-symbol basis. Then, control counter section 201 outputs the number of counts to control signal generating section 202.

Control signal generating section 202 generates switching control signals to switch switching sections 205-1 to 205-n, from the MCS information input from MCS setting section 116 and the number of counts input from control counter section 201, and outputs generated switching control signals to switching sections 205-1 to 205-n. In other words, control signal generating section 202 generates a switching control signal to output to some of switching sections 205-1 to 205-n for selected subcarriers so that switching sections 205-1 to 205-n are switched to output the input data stored in input buffer section 203 to output buffer section 206, while generating another switching control signal to output to the other switching sections 205-1 to 205-n for not-selected sub carriers so that switching sections 205-1 to 205-n are switched to output the input data stored in input buffer section 204 to output buffer section 206. At first, control signal generating section 202 selects subcarriers except subcarriers set for the lowest MCS. As the number of counts input from control counter section 201 increases, control signal generating section 202 sequentially raises the minimum bar of transmission rate for the selection of subcarriers, and selects subcarriers whose MCS correspond to higher transmission rate than the minimum level. By this means, the number of subcarriers selected in control signal generating section 202 gradually decreases as the number of counts increases in control counter section 201.

Input buffer section 203 temporarily stores the input data per subcarrier before peak clipping input from buffer section 103, and when any one of switching sections 205-1 to 205-n for respective subcarriers is made to the output side of input buffer section 203, outputs the stored input data to output buffer section 206.

Input buffer section 204 temporarily stores the input data subjected to peak clipping and FFT input from FFT section 114, and when any one of switching sections 205-1 to 205-n for respective subcarriers is made to the output side of input buffer section 204, outputs the stored input data to output buffer section 206.

Switching sections 205-1 to 205-n are provided for each subcarrier, and based on the switching control signal input from control signal generating section 202, select one of the signal prior to peak clipping stored in input buffer section 203 and the signal subsequent to peak clipping stored in input buffer section 204 to output to output buffer section 206.

Output buffer section 206 outputs the input data on a subcarrier basis input from input buffer section 203 and input buffer section 204 to switching section 104.

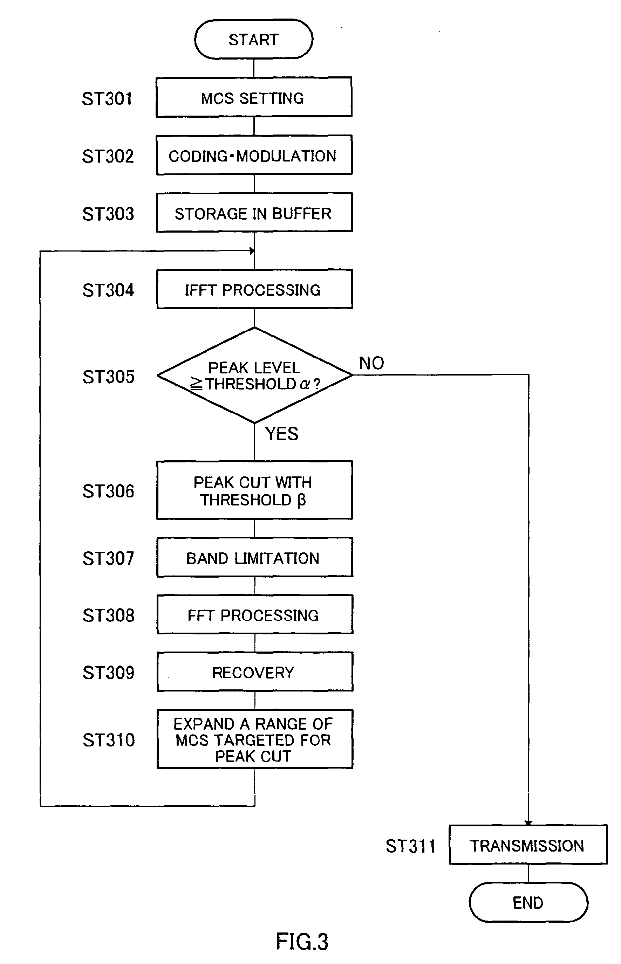

The operation of radio communication apparatus 100 will be described below with reference to FIG.3. FIG.3 is a flow diagram illustrating the operation of radio communication apparatus 100.

First, MCS setting section 116 sets MCS for each subcarrier (step ST301).

Next, based on the set MCS, coding sections 101-1 to 101-n encode the input data, and modulation sections 102-1 to 102-n modulate the data (step ST302).

Subsequently, buffer section 103 stores the input data (step ST303).

Then, IFFT section 105 performs IFFT processing on the input data to transform from the frequency-domain signal to the time-domain signal (step ST304).

Next, peak detecting section 106 determines whether or not a peak level is a threshold $\alpha$ or more (step ST305).

When the peak level is the threshold $\alpha$ or more, peak cut section 107 performs peak clipping on part of the signal amplitude more than or equal to a predetermined threshold $\beta(\alpha>\beta)$ (step ST306).

Next, BPF section 108 performs band limit filtering processing to remove out-of-band unnecessary emission generated in the peak-clipping-processed signal (step ST307).

Subsequently, FFT section 114 performs FFT processing on the input data to transform from the time-domain signal to the frequency-domain signal (step ST308) .

Then, signal recovering section 115 selects subcarriers except subcarriers set for MCS indicative of the lowest transmission rate, replaces the input data to assign to the selected subcarrier with the signal prior to peak clipping, and thereby recovers subcarrier signals set for MCS not targeted for peak clipping (step ST309) .

Further, signal recovering section 115 selects subcarriers except subcarriers set for MCS indicative of the lowest transmission rate and another subcarrier set for MCS indicative of the second lowest transmission rate, thus narrows the range of MCS to select, and thereby expands the range of MCS targeted for peak cut (step ST310).

Then, the processing of steps ST304 to ST310 is repeated until the peak level of the threshold $\alpha$ or more is not detected in step ST305. Herein, signal recovering section 115 decreases the range of MCS to select successively in step ST310 whenever finishing the processing of steps ST304 to ST309 once, and thereby expands the range of MCS targeted for peak cut.

Meanwhile, in step ST305, when the peak level is less than the threshold $\alpha$, switching section 109 switches the input data to be output to D/A conversion section 110, and the input data subjected to peak clipping is transmitted (step ST311).

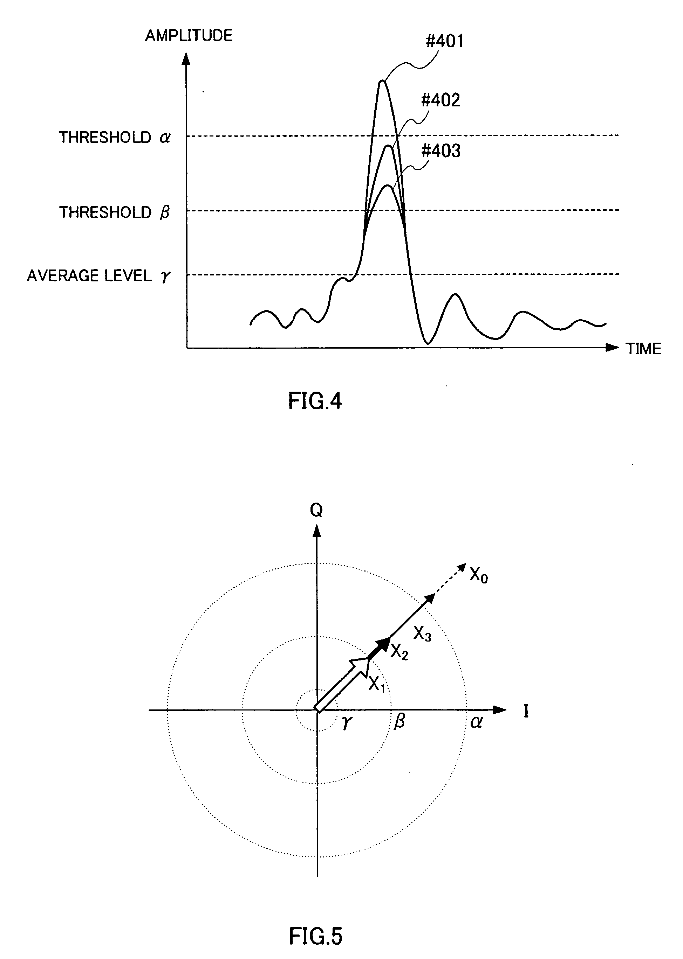

Changes in signal waveform by the aforementioned processing are shown in FIG.4. FIG.4 is a graph showing changes in time waveform of an OFDM signal by peak cut and signal recovery. In FIG.4, waveform #401 is a waveform prior to peak cut, waveform #402 is a waveform subjected to peak cut and then signal recovery in signal recovering section 115, and waveform #403 is a waveform subjected to peak cut and then filtering in BPF section 108. Average level $\gamma$ expresses the average amplitude level of the entire waveform. In the case of FIG.4, a peak level of waveform #402 subjected to peak recovery and then filtering in BPF section 108 is less than the threshold $\alpha$, and therefore, the signal is transmitted without undergoing the peak clipping processing again. The maximum amplitude value of a signal is reduced to the threshold $\beta$ by the peak clipping processing, but as in waveform #403, there is a case that the maximum amplitude value exceeds the threshold $\beta$ again by undergoing the band limit filtering processing in BPF section 108. When signal recovering section 115 further performs signal recovery processing on such a signal, the maximum amplitude value further increases, but the amplitude between thresholds $\alpha$ and $\beta$ allows signal recovery. Herein, signal power is cut excessively if the threshold $\beta$ is set too small. Accordingly, the threshold $\beta$ should be determined for each OFDM symbol considering both the signal power of the threshold $\alpha$ and the signal power more than the threshold $\alpha$.

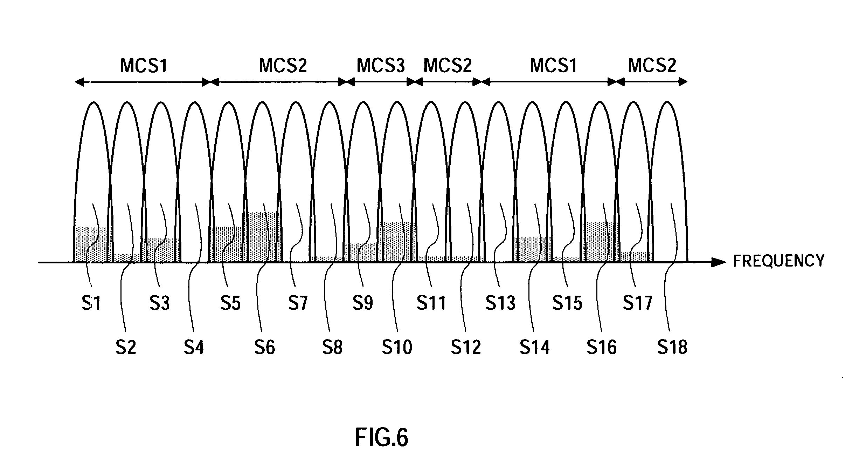

FIG.5 shows a signal at the time peak power of the threshold $\alpha$ or more occurs as a complex vector on the IQ plane. Assuming that a complex signal vector prior to peak clipping is X0, X1 represents a complex signal vector subsequent to peak clipping. The complex signal vector X1 is transformed into X2 after being passed through the band limit filter, and X2 is further transformed into X3 after undergoing the signal recovery processing. It is assumed that only the amplitude changes and the phase is not affected in the aforementioned processing. In addition, in FIG.5, the radius is decreased in the order of threshold $\alpha$, threshold $\beta$, and average level $\gamma$.

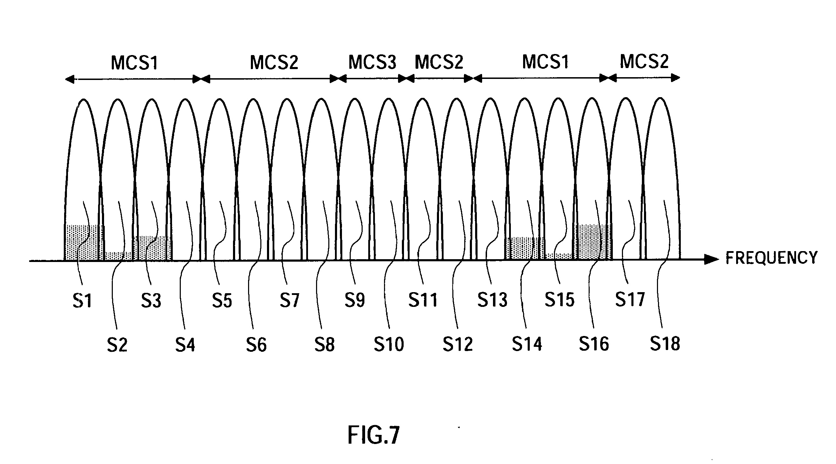

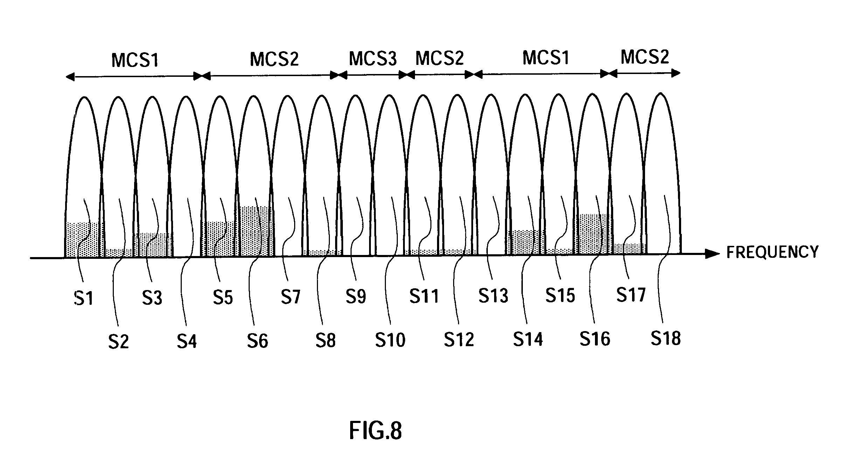

FIGs.6 to 8 illustrate the signal recovery processing in the frequency domain. In FIGs.6 to 8, non-linear distortion levels due to peak clipping are expressed by shaded areas. It is assumed that in some OFDM symbol, MCS setting and the effect of non-linear distortion by peak clipping are as shown in FIG.6. In the signal recovery processing in the first stage, as shown in FIG.7, signal recovering section 115 selects subcarriers (S5 to S12, S17 and S18) except subcarriers (S1 to S4 and S13 to S16) set for MCS 1 to replace with subcarriers which are not subjected to peak clipping and stored in buffer section 103, and thereby is capable of eliminating the effect of peak clipping in the subcarriers (S5 to S12, S17 and S18) except the subcarriers (S1 to S4 and S13 to S16) set for MCS 1 . When a signal exceeding the threshold $\alpha$ is detected as a result of performing the IFFT processing and peak detection after recovering the signal, peak clipping is performed again. Then, signal recovering section 115 performs signal recovery after peak clipping. Since this case is of the second signal recoveryprocessing, as shown in FIG.8, the section 115 selects subcarriers (S9 and S10) except subcarriers (S1 to S8 and S11 to S18) set for MCS 1 and MCS 2 to replace with subcarriers which are not subjected to peak clipping and stored in buffer section 103, and thereby is capable of eliminating the effect of peak clipping in the subcarriers except the subcarriers set for MCS 1 and MCS 2. By thus protecting subcarriers set for upper MCS from non-linear distortion caused by peak clipping, it is possible to perform PAPR suppression without reducing the transmission efficiency.

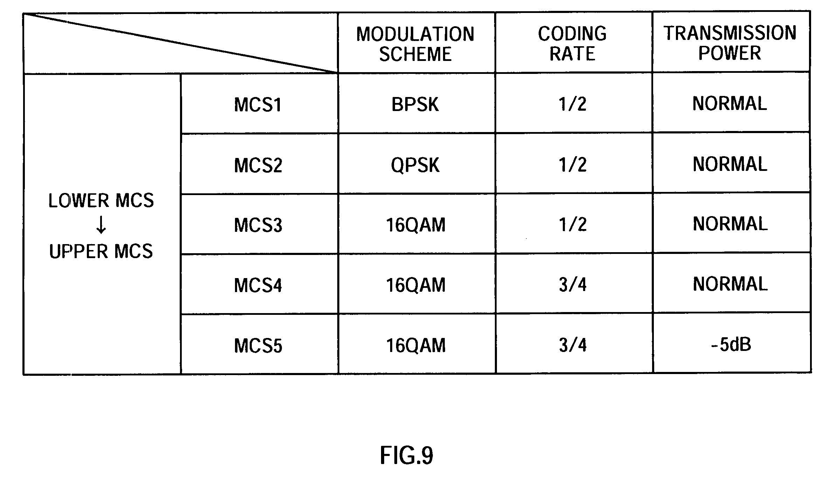

FIG. 9 shows an example of the MCS table. In FIG. 9, the transmission rate is increased in the order of MCS 1, MCS 2, MCS 3, MCS 4 andMCS 5. In performing transmission, MCS setting section 116 refers to the MCS table using CQI and the like, and selects MCS for each symbol. It is possible to select different MCS for each subcarrier in multicarrier transmission. Particularly, in radio communication where frequency selective fading occurs by multipath, since propagation path conditions differ from one another for each subcarrier, it is possible to implement high transmission efficiency by selecting MCS for each subcarrier to be adapted to the propagation path condition.

In addition, in the conventional peak clipping method, peak suppression is uniformly carried out by the degree of contribution to peak power generation irrespective of MCS setting of each subcarrier. For example, when the MCS table as shown in FIG.9 is used and the degree of contribution to peak power generation of a subcarrier A set for MCS is the same as that of a subcarrier B set for MCS 4, the two subcarriers undergo the same amount of non-linear distortion.

However, the transmission efficiency of the subcarrier A is 0.5 bits per symbol, while the transmission efficiency of the subcarrier B is 3 bits per symbol. Accordingly, it is possible to enhance the transmission efficiency of the entire symbols by assigning a higher priority to the subcarrier B than the subcarrier A to protect from non-linear distortion, but this respect is not considered in the conventional peak clipping method.

Thus, according to Embodiment 1, a signal prior to peak clipping is read from the buffer section to replace the signal subsequent to peak clipping, and it is thereby possible to reduce the peak-to-average power ratio without decreasing the transmission efficiency. Further, according to Embodiment 1, when a peak with the threshold $\alpha$ or more is detected after peak clipping, the number of subcarriers to replace is decreased by not selecting successively subcarriers set for MCS indicative of lower transmission rates with low transmission capability whenever the peak is detected. Therefore, the effect of the peak clipping processing can be prevented from concentrating only on MCS indicative of lower transmission rates with low transmission capability, and it is thereby possible to prevent extreme deterioration of error rate characteristics of transmission data assigned subcarriers set for MCS indicative of lower transmission rates.

In addition, Embodiment 1 describes the case of performing peak clipping only on a portion more than or equal to the predetermined threshold $\beta$ in time waveform sample of a signal, but the invention is not limited to such a case. For example, it may be possible multiplexing a weighting function onto a portion more than or equal to the predetermined threshold $\beta$ and adjacent sample points on the time axis, and reducing the maximum amplitude value of the time waveform sample of the signal to less than the predetermined threshold $\beta$. By this means, it is possible to effectively prevent regeneration of peak power value of a transmission signal passed through the band limit filter.

(Embodiment 2)

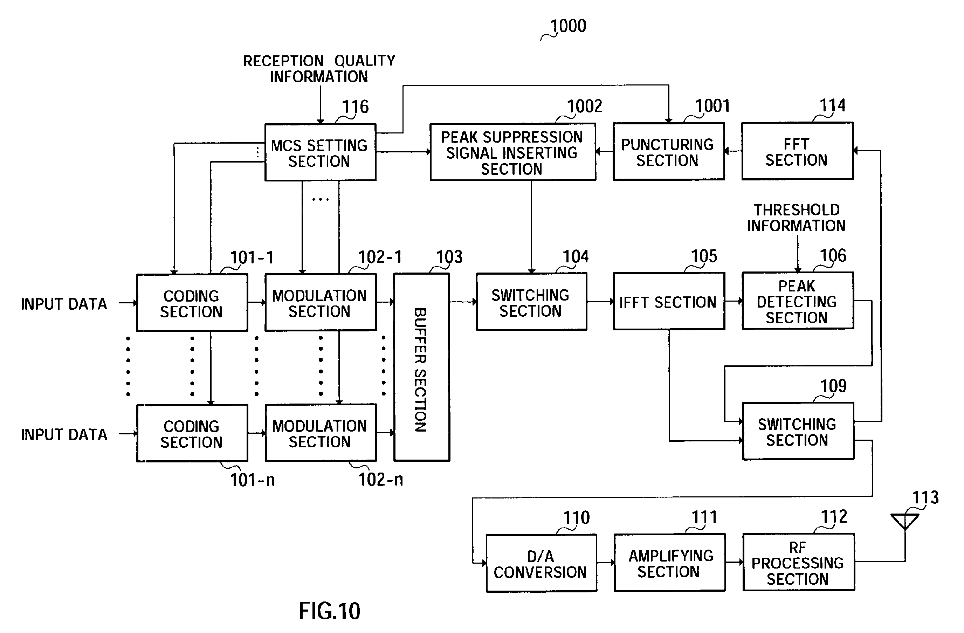

FIG.10 is a block diagram illustrating a configuration of radio communication apparatus 1000 according to Embodiment 2 of the present invention.

As shown in FIG. 10, radio communication apparatus 1000 according to Embodiment 2 has puncturing section 1001 and peak suppression signal inserting section 1002 in radio communication apparatus 100 according to Embodiment 1 as shown in FIG.1 without peak cut section 107, BPF section 108 and signal recovering section 115. In addition, in FIG.10, the same sections as in FIG.1 are assigned the same reference numerals to omit descriptions thereof.

Based on MCS information input from MCS setting section 116, puncturing section 1001 performs puncturing (thinning processing) on input data (elimination target transmission signal) assigned to part of subcarriers (low-transmission rate subcarriers) set for MCS indicative of lower transmission rates less than a predetermined threshold (third threshold) not to transmit, and outputs the puncturing-processed input data to peak suppression signal inserting section 1002. In addition, details of puncturing section 1001 will be described later.

Peak suppression signal inserting section 1002 assigns a peak suppression signal to decrease the maximum peak power in an OFDM symbol to the puncturing-processed subcarrier. Then, peak suppression signal inserting section 1002 outputs the input data assigned the peak suppression signal to switching section 104.

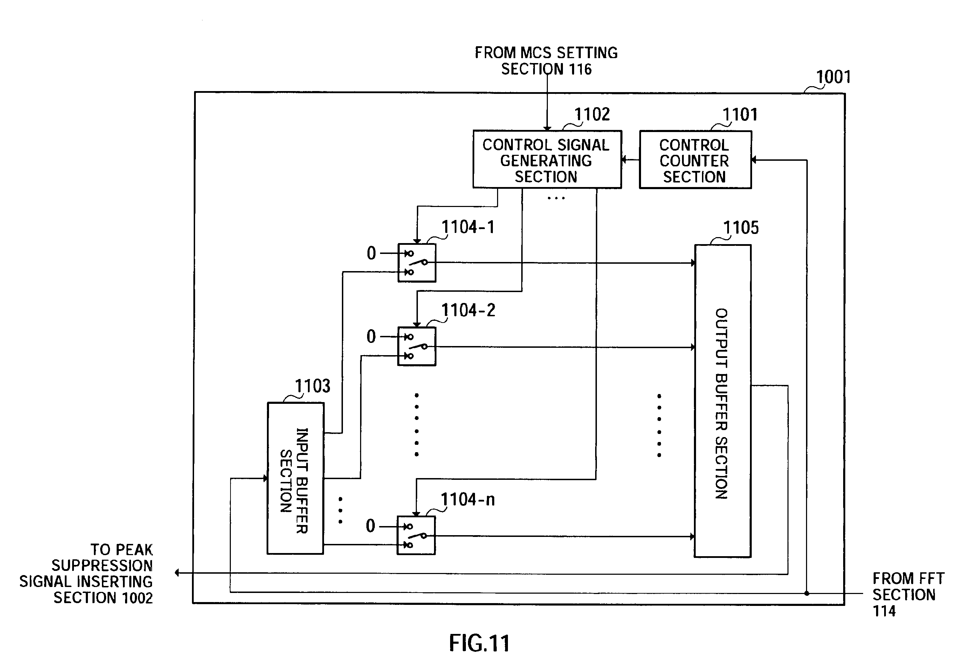

Details of puncturing section 1001 will be described below with reference to FIG.11. FIG.11 is a block diagram illustrating a configuration of puncturing section 1001.

Control counter section 1101 counts the input data and increments by one whenever the input data is input from FFT section 114. In other words, control counter section 1101 counts the number of repetitions of peak clipping based on an OFDM-symbol basis. Then, control counter section 1101 outputs the number of counts to control signal generating section 1102.

Control signal generating section 1102 generates a switching control signal to switch each of switching sections 1104-1 to 1104-n, from the MCS information input from MCS setting section 116 and the number of counts input from control counter section 1101, and outputs the generated switching control signal to each of switching sections 1104-1 to 1104-n. In other words, control signal generating section 1102 generates a switching control signal to output to some of switching sections 1104-1 to 1104-n for not-selected subcarriers so that switching sections 1104-1 to 1104-n are switched to output the input data stored in input buffer section 1103 to output buffer section 1105, while generating another switching control signal to output to the other switching sections 1104-1 to 1104-n for selected subcarriers so that switching sections 1104-1 to 1104-n are switched to output "0" to output buffer section 1105. At first, control signal generating section 1102 selects subcarriers set for MCS indicative of the lowest transmission rate. As the number of counts input from control counter section 1101 increases, control signal generating section 1102 sequentially raises the maximum bar of transmission rate for the selection of subcarriers, and selects subcarriers whose MCS correspond to lower transmission rate than the maximum level. By this means, the number of subcarriers selected in control signal generating section 1102 gradually increases as the number of counts increases in control counter section 1101.

Input buffer section 1103 temporarily stores the FFT-processed input data input from FFT section 114, and when any one of switching sections 1104-1 to 1104-n for respective subcarriers is made, outputs the stored input data to output buffer section 1105.

Switching sections 1104-1 to 1104-n are provided for each subcarrier, and based on the switching control signal input from control signal generating section 1102, select one of "0" and the peak-clipping-processed signal stored in input buffer section 1103 to output to output buffer section 1105.

Output buffer section 1105 outputs "0" and the input data on a subcarrier basis input from input buffer section 1103 to peak suppression signal inserting section 1102.

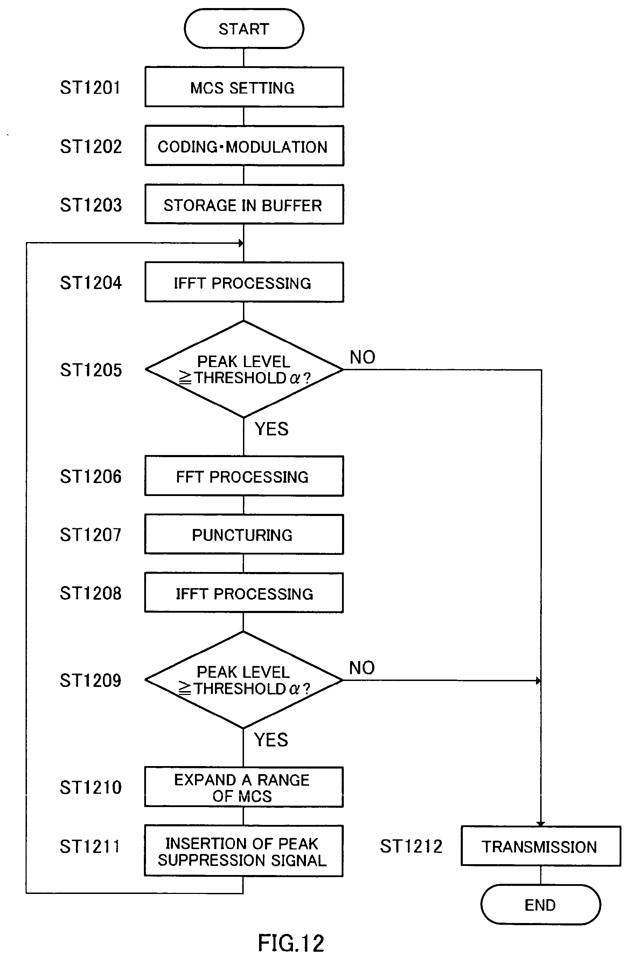

The operation of radio communication apparatus 1000 will be described below with reference to FIG.12. FIG. 12 is a flow diagram illustrating the operation of radio communication apparatus 1000.

First, MCS setting section 116 sets MCS for each subcarrier (step ST1201).

Next, based on the set MCS, coding sections 101-1 to 101-n encode the input data, and modulation sections 102-1 to 102-n modulate the data (step ST1202).

Subsequently, buffer section 103 stores the input data (step ST1203).

Then, IFFT section 105 performs IFFT processing on the input data to transform from the frequency-domain signal to the time-domain signal (step ST1204).

Next, peak detecting section 106 determines whether or not a peak level is the threshold $\alpha$ or more (step ST1205).

When the peak level is the threshold $\alpha$ or more, FFT section 114 performs FFT processing on the input data to transform from the time-domain signal to the frequency-domain signal (step ST1206).

Next, puncturing section 1001 selects part of subcarriers set for MCS indicative of the lowest transmission rate, and performs puncturing on the selected subcarriers (step ST1207).

Subsequently, IFFT section 105 performs IFFT processing on the puncturing-processed input data to transform from the frequency-domain signal to the time-domain signal (step ST1208).

Then, peak detecting section 106 determines again whether or not a peak level is the threshold $\alpha$ or more (step ST1209).

When the peak level is the threshold $\alpha$ or more, puncturing section 1001 selects a subcarrier set for MCS indicative of the lowest transmission rate and another subcarrier set for MCS with a second lowest transmission rate to expand a range of MCS (step ST1210).

Peak suppression signal inserting section 1002 inserts the peak suppression signal as a substitute for the puncturing-processed subcarrier (step ST1211).

Then, the processing of steps ST1204 to ST1211 is repeated until the peak level of the threshold $\alpha$ or more is not detected in steps ST1205 and ST1209. Herein, puncturing section 1001 successively expands the range of MCS to select in step ST1210 whenever finishing the processing of steps ST1204 to ST1209 once.

Meanwhile, when the peak level is less than the threshold $\alpha$ in steps ST1205 and ST1209, switching section 109 is switched to output the input data to D/A conversion section 110, and the peak suppressed input data is transmitted (step ST1212).

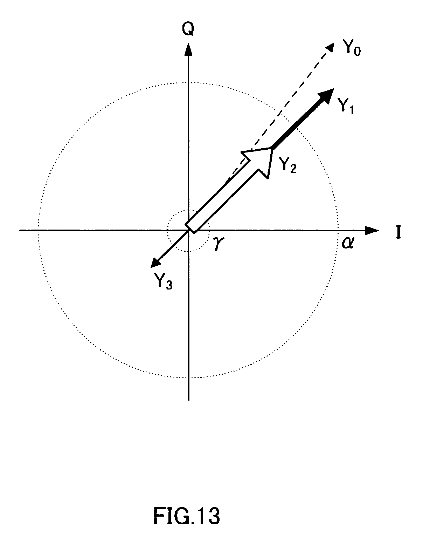

FIG.13 illustrates amethodof generating the peak suppression signal to insert as a substitute for a puncturing-processed subcarrier. Assuming that $Y_0$ is a complex signal vector that generates maximum peak power in an OFDM symbol and that $Y_1$ is the puncturing-processed signal, it is possible to reduce the peak to $Y_2$ by generating a signal with phase $Y_3$ and inserting such a signal. This method does not have the advantageous effect on signals more than or equal to the threshold $\alpha$ in time samples except the complex signal vector that generates the maximum peak power. Therefore, as another method, it is possible to insert the peak suppression signal to minimize the total sum of signal power more than or equal to the threshold $\alpha$ in an OFDM symbol. In addition, in FIG.13, the radius decreases in the order of the threshold $\alpha$ and average level $\gamma$.

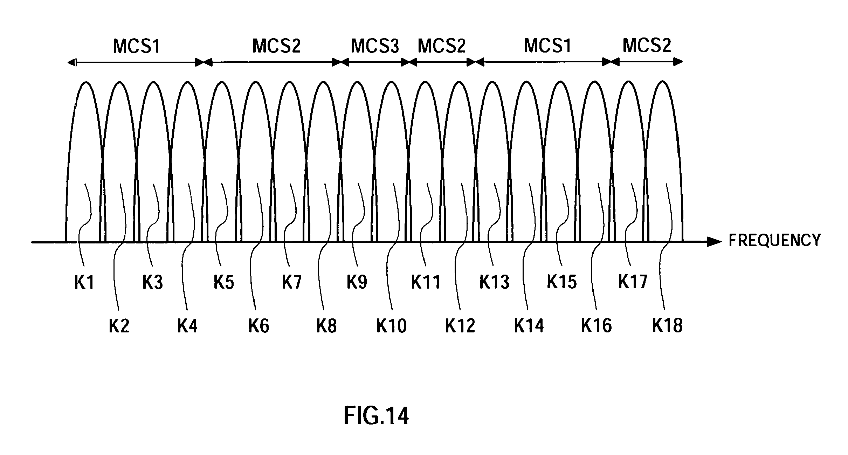

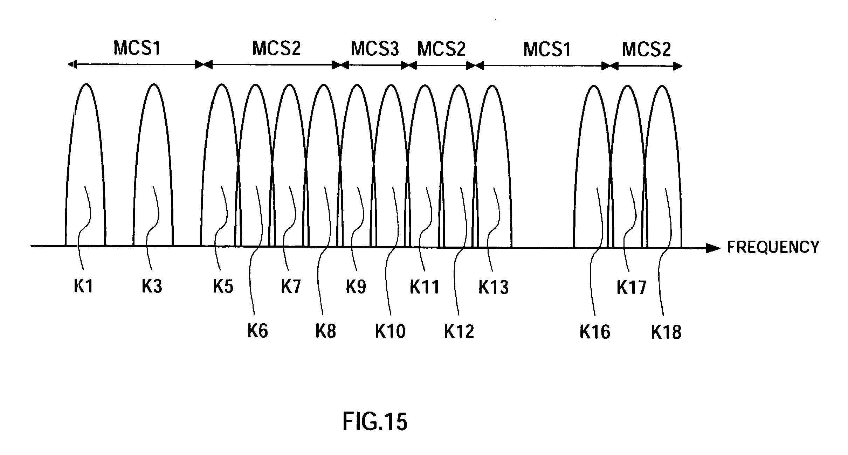

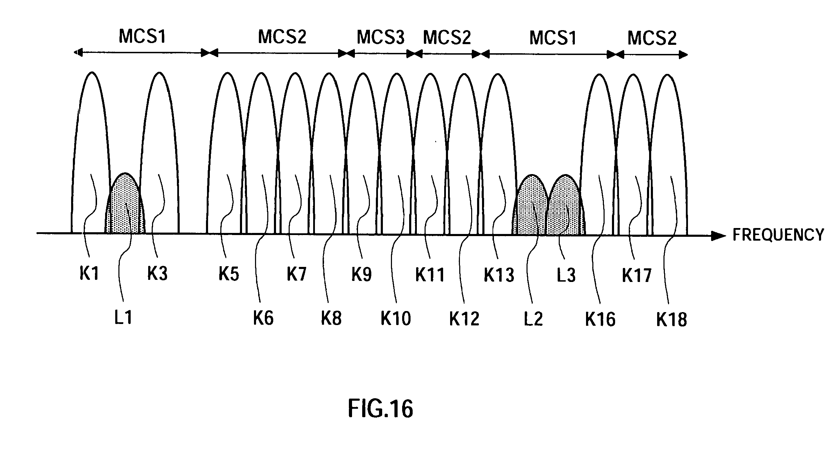

FIGs. 14 to 16 illustrate puncturing and insertion of peak suppression signal in the frequency domain. It is assumed that a signal with amplitude more than or equal to the threshold $\alpha$ occurs when MCS setting is as shown in FIG.14. At this time, as shown in FIG.15, puncturing section 1001 performs puncturing on subcarriers (K2, K4, K14 and K15) with large degrees of contribution to peak power generation among subcarriers (K1 to K4 and K13 to K16) set for MCS 1 indicative of the lowest transmission rate. Then, as shown in FIG.16, when a signal with amplitude more than or equal to the threshold $\alpha$ still occurs even after puncturing, peak suppression signal inserting section 1002 inserts peak suppression signals (L1, L2 and L3) as substitutes for puncturing-processed subcarriers (K2, K4, K14 and K15).

Thus, according to Embodiment 2, puncturing is performed on input data assigned to subcarriers set for MCS with lower transmission rate when a peak above a threshold occurs. It is thereby possible to reduce the peak-to-average power ratio without decreasing the transmission efficiency.

In addition, Embodiment 2 describes performing puncturing corresponding to the transmission rate of MCS of each subcarrier, but the invention is not limited thereto. Puncturing may be performed corresponding to any parameters enabling predetermined communication quality to be maintained.

(Other Embodiments)

In the radio communication apparatus according to aforementioned Embodiment 1 or 2, when retransmission is performed for each subcarrier, the amplitude limitation level is adjusted by the retransmission number in performing signal recovery, puncturing or insertion of peak suppression signal. In this case, it is designed to input information indicative of the number of retransmission for each subcarrier to signal recovering section 115 or puncturing section 1001.

Further, in the radio communication apparatus according to aforementioned Embodiment 1 or 2, when both speech data and image data exists in a symbol, the amplitude limitation level is adjusted to protect a subcarrier assigned the speech data by performing signal recovery, puncturing or insertion of peak suppression signal while noticing the data type. In this case, it is designed to input information indicative of the data type for each subcarrier to signal recovering section 115.

Furthermore, in the radio communication apparatus according to aforementioned Embodiment 1 or 2, when systematic code such as turbo coding is used, the amplitude limitation level is adjusted to protect a subcarrier assigned a large number of systematic bits by performing signal recovery, puncturing or insertion of peak suppression signal while noticing numbers of assigned systematic bits and parity bits of each subcarrier. In this case, it is designed to input information indicative of the number of systematic bits for each subcarrier to signal recovering section 115.

Thus, according to this Embodiment, when the difference of the number of retransmission is noticed, it is possible to protect subcarriers assigned retransmission data. Further, according to this Embodiment, when the data type is noticed, it is possible to minimize the effect of peak clipping on the speech data, and to protect the speech data. Furthermore, according to this embodiment, when the difference of the number of systematic bits is noticed, it is possible to maintain the error correcting capability of systematic code by protecting subcarriers with a large number of systematic bits.

In addition, in aforementioned Embodiment 1, Embodiment 2 and other Embodiments, the threshold $\alpha$ to detect a peak is shared and used for all the subcarriers, but the invention is not limited thereto. It may be possible grouping subcarriers corresponding to MCS setting, and detecting a peak using thresholds differing from one another for each group. Further, aforementioned Embodiment 1, Embodiment 2 and other Embodiments describe the case of assigning adaptively MCS based on reception quality information. However, the invention is not limited to such a case and applicable to a case of assigning different fixed MCS to each subcarrier. Furthermore, aforementioned Embodiment 1, Embodiment 2 and other Embodiments describe the peak clipping processing in the OFDM system. However, the invention is not limited to such a case, and applicable to peak clipping processing in any communication systems using multicarrier transmission signal as well as the OFDM system. The radio communication apparatuses in aforementioned Embodiment 1, Embodiment 2 and other Embodiments are applicable to a base station apparatus and communication terminal apparatus.

The present application is based on Japanese Patent Application No. 2003-334007 filed on September 25, 2003, entire content of which is expressly incorporated by reference herein.

Industrial Applicability

The present invention relates to a radio communication apparatus and peak suppressing method, and more particularly, is suitable for use in a radio communication apparatus that transmits transmission data with a plurality of subcarriers and a peak suppressing method.

FIG.1 FIG.10
101-1 101-n CODING SECTION
INPUT DATA
102-1 102-n MODULATION SECTION
103 BUFFER SECTION
104 SWITCHING SECTION
105 IFFT SECTION
106 PEAK DETECTING SECTION
THRESHOLD INFORMATION
107 PEAK CUT SECTION
108 BPF SECTION
109 SWITCHING SECTION
110 D/A CONVERSION
111 AMPLIFYING SECTION
112 RF PROCESSING SECTION
FIG.2
201 CONTROL COUNTER SECTION
202 CONTROL SIGNAL GENERATING SECTION
FROM MCS SETTING SECTION 116
203 INPUT BUFFER SECTION
FROM BUFFER SECTION 103
204 INPUT BUFFER SECTION

FROM FFT SECTION 114

206 OUTPUT BUFFER SECTION

TO SWITCHING SECTION 104

FIG.3

START

ST301 MCS SETTING

ST302 CODING·MODULATION

ST303 STORAGE IN BUFFER

ST304 IFFT PROCESSING

ST305 PEAK LEVEL $\geq$ THRESHOLD $\alpha$?

ST306 PEAK CUT WITH THRESHOLD $\beta$

ST307 BAND LIMITATION

ST308 FFT PROCESSING

ST309 RECOVERY

ST310 EXPAND A RANGE OF MCS TARGETED FOR PEAK CUT

ST311 TRANSMISSION

END

FIG.4

AMPLITUDE

THRESHOLD $\alpha$

THRESHOLD $\beta$

AVERAGE LEVEL $\gamma$

TIME

FIG. 6~FIG. 8 FIG. 14~FIG. 16

FREQUENCY

FIG. 9

LOWER MCS

UPPER MCS

MODULATION SCHEME

CODING RATE

TRANSMISSION POWER

NORMAL

FIG.10

1001 PUNCTURING SECTION

1002 PEAK SUPPRESSION SIGNAL INSERTING SECTION

FIG.11

1101 CONTROL COUNTER SECTION

1102 CONTROL SIGNAL GENERATING SECTION

FROM MCS SETTING SECTION 116

1103 INPUT BUFFER SECTION

FROM FFT SECTION 114

1105 OUTPUT BUFFER SECTION

TO PEAK SUPPRESSION SIGNAL INSERTING SECTION 1002

FIG.12

START

ST1201 MCS SETTING

ST1202 CODING - MODULATION

ST1203 STORAGE IN BUFFER

ST1204 IFFT PROCESSING

ST1205 PEAK LEVEL $\geq$ THRESHOLD $\alpha$?

ST1206 FFT PROCESSING

ST1207 PUNCTURING

ST1208 IFFT PROCESSING

ST1209 PEAK LEVEL $\geq$ THRESHOLD $\alpha$?

ST1210 EXPAND A RANGE OF MCS

ST1211 INSERTION OF PEAK SUPPRESSION SIGNAL

ST1212 TRANSMISSION

END

**Claims**

1. A radio communication apparatus comprising:

a transmission rate setter that sets a higher transmission rate on a subcarrier with a larger measurement value indicative of reception quality of a communicating party;
a peak detector that detects a suppression target peak such that a signal level of a transmission signal is greater than or equal to a first threshold;
a peak suppressor that suppresses the suppression target peak by a predetermined amount based on a transmission signal that is assigned to a subcarrier with a transmission rate set in the transmission rate setter below a second threshold; and
atransmitterthattransmitsthetransmissionsignal with the suppression target peak suppressed in the peak suppressor.

2. The radio communication apparatus according to claim 1, further comprising:

a buffer that stores a transmission signal before the peak suppression in the peak suppressor;
wherein the peak suppressor replaces the suppressed transmission signal assigned to a high transmission rate subcarrier with a transmission rate set in the transmission rate setter being greater than or equal to the second threshold with the transmission signal stored in the buffer corresponding to the suppressed transmission signal to assign to the high transmission rate subcarrier, while suppressing the suppression target peak in the transmission signal assigned to a subcarrier with a transmission rate set in the transmission rate setter below the second threshold.

3. The radio communication apparatus according to claim 1, wherein the peak suppressor suppresses the suppression target peak by eliminating an elimination target transmission signal assigned to a low transmission rate subcarrier with a transmission rate set in the transmission rate setter below the second threshold and assigning a peak suppression signal to the low transmission rate subcarrier.

4. The radio communication apparatus according to claim 1, wherein:

the peak detector performs processing of detecting the suppression target peak every time the peak suppressor performs peak suppression processing of suppressing the suppression target peak; and
the peak suppressor repeats the peak suppression processing until the suppression target peak is no longer detected in the peak detector, and changes the second threshold so as to increase the transmission rate every time the peak suppression processing is performed.

5. A communication terminal apparatus having a radio communication apparatus, the radio communication apparatus comprising:

a transmission rate setter that sets a higher transmission rate on a subcarrier with a larger measurement value indicative of reception quality of a communicating party;
a peak detector that detects a suppression target peak such that a signal level of a transmission signal is greater than or equal to a first threshold;
a peak suppressor that suppresses the suppression target peak by a predetermined amount based on a transmission signal that is assigned to a subcarrier with a transmission rate set in the transmission rate setter below a second threshold; and
atransmitterthattransmitsthetransmissionsignal with the suppression target peak suppressed in the peak suppressor.

6. A base station apparatus having a radio communication apparatus, comprising:

a transmission rate setter that sets a higher transmission rate on a subcarrier with a larger measurement value indicative of reception quality of a communicating party;
a peak detector that detects a suppression target peak such that a signal level of a transmission signal is more than or equal to a first threshold;
a peak suppressor that suppresses the suppression target peak by a predetermined amount based on a transmission signal that is assigned to a subcarrier with a transmission rate set in the transmission rate setter below a second threshold; and
a transmitter that transmits the transmission signal with the suppression target peak suppressed in the peak suppressor.

**7.** A peak suppressing method comprising:

setting a higher transmission rate on a subcarrier with a larger measurement value indicative of reception quality of a communicating party;
detecting a suppression target peak such that a signal level of a transmission signal is more than or equal to a first threshold; and
suppressing the suppression target peak by a predetermined amount based on a transmission signal that is assigned to a subcarrier with a transmission rate set below a second threshold.

**8.** The peak suppressing method according to claim 7, further comprising:

storing a transmission signal before the peak suppression,
wherein a suppressed transmission signal assigned to a high-transmission rate subcarrier with a set transmission rate greater than or equal to the second threshold is replaced with the stored transmission signal corresponding to the suppressed transmission signal to assign the stored transmission signal to the high-transmission rate subcarrier, while the suppression target peak is suppressed using a transmission signal assigned to a subcarrier with a transmission rate set below the second threshold.

**9.** The peak suppressing method according to claim 7, wherein the suppression target peak is suppressed by eliminating an an elimination target transmission signal assigned to a low-transmission rate subcarrier with a transmission rate set below the second threshold is and assigning a peak suppression signal to the low-transmission rate subcarrier.

FIG.1

FIG.2

FIG.3

FIG.4

FIG.5

FIG.6

FIG.7

FIG.8

| | | MODULATION SCHEME | CODING RATE | TRANSMISSION POWER |
|---|---|---|---|---|
| LOWER MCS ↓ UPPER MCS | MCS1 | BPSK | 1/2 | NORMAL |
| | MCS2 | QPSK | 1/2 | NORMAL |
| | MCS3 | 16QAM | 1/2 | NORMAL |
| | MCS4 | 16QAM | 3/4 | NORMAL |
| | MCS5 | 16QAM | 3/4 | -5dB |

FIG.9

EP 1 659 722 A1

EP 1 659 722 A1

RECEPTION QUALITY
INFORMATION

**1000**

| MCS SETTING SECTION | 116 |
| PEAK SUPPRESSION SIGNAL INSERTING SECTION | 1002 |
| PUNCTURING SECTION | 1001 |
| FFT SECTION | 114 |

INPUT DATA → CODING SECTION (101-1) → MODULATION SECTION (102-1) → BUFFER SECTION (103)

INPUT DATA → CODING SECTION (101-n) → MODULATION SECTION (102-n)

SWITCHING SECTION (104) → IFFT SECTION (105) → PEAK DETECTING SECTION (106)

THRESHOLD INFORMATION

SWITCHING SECTION (109)

D/A CONVERSION (110) → AMPLIFYING SECTION (111) → RF PROCESSING SECTION (112)

113

FIG.10

FROM MCS SETTING
SECTION 116

1001

1102

CONTROL SIGNAL
GENERATING
SECTION

1101

CONTROL
COUNTER
SECTION

. . .

1104-1

0

1104-2

0

1103

INPUT BUFFER
SECTION

1105

OUTPUT BUFFER SECTION

1104-n

0

TO PEAK
SUPPRESSION
SIGNAL INSERTING
SECTION 1002

FROM FFT
SECTION
114

FIG.11

FIG.12

FIG.13

FIG.14

MCS1     MCS2     MCS3   MCS2     MCS1     MCS2

FREQUENCY

K1    K3    K5    K7    K9    K11    K13     K17

K6    K8    K10    K12     K16    K18

**FIG.15**

FIG.16

**EP 1 659 722 A1**

## INTERNATIONAL SEARCH REPORT

| | International application No. |
|---|---|
| | PCT/JP2004/013682 |

**A. CLASSIFICATION OF SUBJECT MATTER**
Int.Cl⁷ H04J11/00

According to International Patent Classification (IPC) or to both national classification and IPC

**B. FIELDS SEARCHED**

Minimum documentation searched (classification system followed by classification symbols)
Int.Cl⁷ H04J11/00

Documentation searched other than minimum documentation to the extent that such documents are included in the fields searched

| Jitsuyo Shinan Koho | 1926-1996 | Toroku Jitsuyo Shinan Koho | 1994-2004 |
|---|---|---|---|
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2001-268050 A  (Fujitsu Ltd.),<br>28 September, 2001 (28.09.01),<br>Par. Nos. [0129] to [0132]<br>(Family: none) | 1,3,5-7,9<br>2,4,8 |
| Y<br>A | JP 2002-16577 A  (Sony Corp.),<br>18 January, 2002 (18.01.02),<br>Full text; all drawings<br>(Family: none) | 1,3,5-7,9<br>2,4,8 |
| Y<br>A | JP 2003-174428 A  (Toshiba Corp.),<br>30 June, 2003 (30.06.03),<br>Full text; all drawings<br>& EP 1298876 A1        & US 2003/0090993 A1<br>& CN 1411179 A | 1,3,5-7,9<br>2,4,8 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>03 December, 2004 (03.12.04) | Date of mailing of the international search report<br>21 December, 2004 (21.12.04) |
|---|---|
| Name and mailing address of the ISA/<br>Japanese Patent Office | Authorized officer |
| Facsimile No. | Telephone No. |

Form PCT/ISA/210 (second sheet) (January 2004)

28

**INTERNATIONAL SEARCH REPORT**

International application No.

PCT/JP2004/013682

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-283460 A (Matsushita Electric Industrial Co., Ltd.), 03 October, 2003 (03.10.03), Par. No. [0051] & WO 2003/081821 A1 & AU 2003221425 A1 | 2,4,8 |
| A | JP 9-98146 A (Victor Company Of Japan, Ltd.), 08 April, 1997 (08.04.97), Par. Nos. [0035] to [0037] & EP 766432 A2 & JP 9-116521 A & US 5822323 A & JP 3525578 B2 & JP 3541526 B2 | 2,4,8 |
| A | JP 2002-190787 A (Matsushita Electric Industrial Co., Ltd.), 05 July, 2002 (05.07.02), Full text; all drawings (Family: none) | 2,4,8 |

Form PCT/ISA/210 (continuation of second sheet) (January 2004)